Europäisches Patentamt

European Patent Office

Office européen des brevets

(19)

(11) EP 0 596 914 B1

(12) EUROPEAN PATENT SPECIFICATION

(45) Date of publication and mention
of the grant of the patent:
**24.09.1997 Bulletin 1997/39**

(21) Application number: **92915013.4**

(22) Date of filing: **10.07.1992**

(51) Int Cl.6: **H04L 12/56**, H04Q 11/04

(86) International application number:
**PCT/EP92/01559**

(87) International publication number:
**WO 93/03564 (18.02.1993 Gazette 1993/05)**

(54) **METHOD AND UNIT FOR THE CONTROL OF THE CELL FLOW IN A TELECOMMUNICATION SYSTEM ACCORDING TO THE ATM TECHNIQUE**

VERFAHREN UND EINHEIT ZUR REGELUNG DES ZELLFLUSSES IN EINEM FERNMELDESYSTEM IN ATM-TECHNIK

PROCEDE ET UNITE DE COMMANDE DU DEBIT D'UNITES DE DONNEES DANS UN SYSTEME DE TELECOMMUNICATION SELON LA TECHNIQUE DE MODE DE TRANSFERT ASYNCHRONE

(84) Designated Contracting States:
**BE CH DE ES FR GB GR LI NL SE**

(30) Priority: **26.07.1991 IT MI912076**

(43) Date of publication of application:
**18.05.1994 Bulletin 1994/20**

(73) Proprietor: **ITALTEL SOCIETA ITALIANA TELECOMUNICAZIONI s.p.a.**
**20149 Milano (IT)**

(72) Inventors:
• **BALBONI, Gianpaolo**
  **I-10125 Torino (IT)**
• **COLLIVIGNARELLI, Marco**
  **I-28040 Dormelletto (IT)**
• **CONIGLIARO, Salvatore**
  **I-20025 Legnano (IT)**

(74) Representative: **Giustini, Delio**
**c/o Italtel Società Italiana**
**Telecomunicazioni s.p.a.**
**P.O. Box 10**
**20019 Settimo Milanese (MI) (IT)**

(56) References cited:
**EP-A- 0 366 635       EP-A- 0 381 275**

• **COMPUTER NETWORKS AND ISDN SYSTEMS vol. 20, no. 1/5, December 1990, AMSTERDAM, NL pages 415 - 423 , XP161300 A. ECKBERG ET AL**
• **INT. JOURNAL OF DIGITAL AND ANALOG COMMUNICATION SYSTEMS vol. 3, 1990, NY, US pages 187 - 197 , XP255806 G. NIESTEGGE**

## Description

Field of the Invention

The present invention relates generally to a method for the control of the cell flow in telecommunication systems employing a particular numeric technique, called ATM (Asynchronous Transfer Mode), for the transmission and/or communication of voice and video signals and data.

In the ATM technique, data relevant to different users and services are organized as timely contiguous units with a fix length of approximately 400 bits, called cells. Cell bits are subdivided into a field containing information to be exchanged, and in a header, containing information necessary to the cell routing through the switching network and other service information.

The ATM technique is considered as the most promising solution for multiplexing and switching, in the evolution of public communication networks towards the future broad band integrated services digital network (B-ISDN), since this technique allows a great flexibility versus the previous (circuit switching) systems.

A given number of connections, called Virtual Channels (VC) and Virtual Path (VP) can be active at the same time on an ATM link. The virtual channel is a logic association between terminal points of a link enabling the unidirectional cell transfer on that link, while the virtual path is a logic association of virtual channels between the terminal points of a link enabling the unidirectional transfer of cells belonging to a group of virtual channels existing on that link [see also CCITT Rec. I. 113]. A varying number of virtual channels and/or virtual paths (VC/VP) can be associated to each user or to each call, because a same ATM user could have several calls established at the same time and each virtual channel can require a special number of cells in the time unit, thus obtaining a very high flexibility of the network in the management of data.

In particular, the allocation of network resources can be made on the basis of what is actually required by the user, thus allowing a high effectiveness particularly in the case of connections requiring variable network resources.

However, due to the fact that the ATM technique is of the asynchronous type and subject to considerable use variations by users (in a wide sense), it is necessary to monitor the flow of cells sent to the switching network of the ATM system to prevent the overloading of the same and particularly an overload ascribable to transmission by users of a number of cells higher than that agreed with the network operator, on which basis the necessary network resources are allocated to the call and the accounting is made for the use of the network itself. In this case it is defined a "band width" higher than that agreed with the network operator.

This control is called UPC (Usage Parameter Control) in ATM environment and can take place depending on one of more flow parameters, generally tied to the "frequency" or more particularly to the bit rate, that is to the number of bits transmitted in a given time interval.

To this purpose users connected to the network can be divided on the basis of the service required which can be at constant Bit Rate (CBR) or at Variable Bit Rate (VBR). In the case of CBR services the characteristic of the connection are sufficiently identified by a single parameter, i.e. the agreed bit rate, while in the case of VBR services two parameters at least have to be considered, for instance the ripple $R_p$ bit rate (measured on a short time period) and the medium $R_m$ bit rate (measured on a longer time period).

A method for the control of the flow in an ATM network can be that to foresee the control or monitoring of the bit rate agreed for each CBR connection (or user) coming into the switching network and the ripple bit rate for each VBR connection, excluding the cells in excess of these values. This solution is acceptable for CBR connections, but it results too rigid for VBR ones, compromising a great part of the advantages of an ATM network.

The solution proposed for VBR connections is therefore to eliminate exceeding cells according to given criteria which consider also the average bit rate, agreed by each network user and the network operator, besides the ripple one.

Background Art

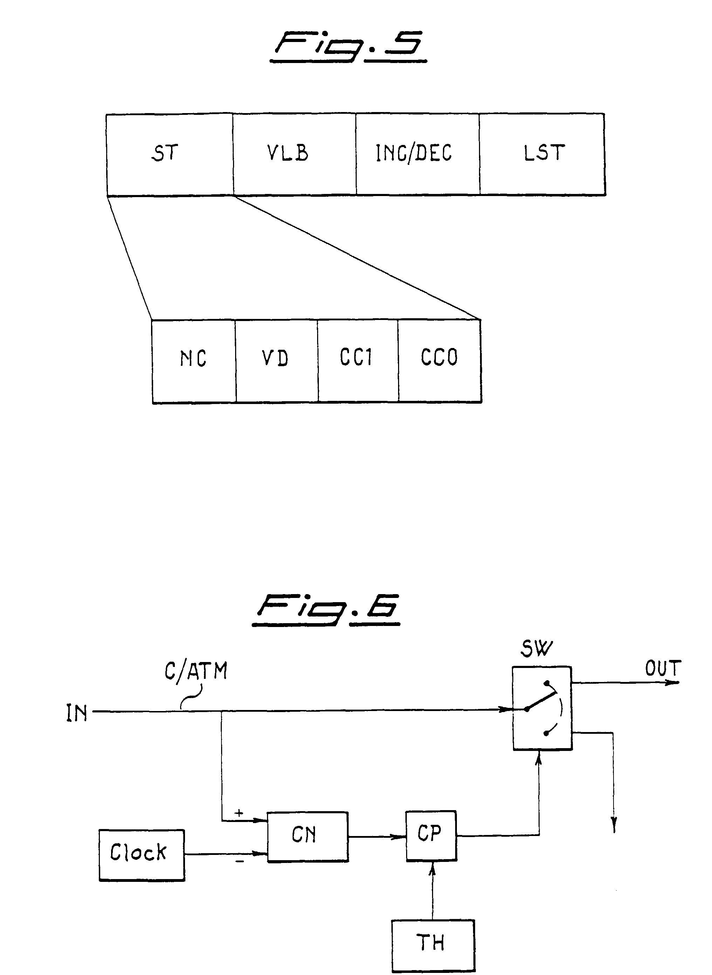

A method for the control of traffic parameters agreed upon between the user and the network operator, which was proposed in ATM environment, is the so-called "Leaky Bucket". This method is shown in Fig. 6 and can be considered from the conceptual point of view as including a counter CN, counting the IN input cells (with an assigned header), and which is increased at each cell input and periodically decreased by a Clock signal, whose frequency is defined on the basis of the value agreed for the traffic parameter to be controlled. The counter output is connected to the input of a comparator CP, receiving on the other input a reference threshold value (stored in a TH register being also a function of the value agreed for the traffic parameter to be controlled), and emitting at the output a control logic signal of a SW switch, rejecting the cell or letting it go on.

Until the CN counter value is lower than the value assigned for the threshold, cells coming from that connection are accepted, that is routed to the network. When the counter content exceeds the threshold value, the cell is rejected since the user has sent a number of cells higher than the one agreed upon.

This method enables to control the agreed Bit Rate, suitably fixing the decrease frequency of the counter CN and the threshold value TH. In particular, in this case the "Leaky Bucket" mechanism is used to control the average Bit Rate of a VBR connection, it results that the threshold value TH is much higher than that for the control of the ripple Bit Rate of a VBR connection (or of the Bit Rate defining the connection, if this is of the CBR type), since the user behaviour has to be averaged on a long enough time period.

However, the method described hereabove has some inconvenience and limit for use in an ATM network, due to the fact that control has to be extended to all VC/VP (virtual channels/virtual paths) which can be active at the same time on a given ATM link. In fact the Leaky Bucket mechanism acts on the basis of the traffic parameter value agreed for the VC/VP, therefore a counter CN and a register TH has to be assigned to each active VC/VP and each CN counter has to be decreased in a differentiate mode at the frequency defined for each VC/VP, and therefore the above described device becomes quickly complex due to the high number of VC/VP which can be active at the same time on a link.

EP-A-0 381 275 discloses a method for protecting a plurality of virtual, asynchronously time-divided transmission channels aganst an exceeding of the maximum cell frequencies, based on the "leacky bucket"-entrance monitoring method.

The state of the counter of the relevant channel will be decreased on the arrival of a data cell by a value which is a function of the length of time between the moment of arrival of that data cell and the moment of arrival of a preceding data cell with the same channel indication. The decrease of the state of the counter takes place under the same time regime as the arrival of the data cells. Also the increase of the state of the counter, the comparison of that state of the counter with a threshold value and the switching through or not, dependent on the result of the comparison, of the data cell takes place under the same time regime.

In particular the current value of the counter (VLB) is updated only upon the arrival of an information cell relating to the associated connection (i.e. increased by a first quantity and decreased by a second quantity which is a function of the length of time elapsed between two consecutive updatings of said current value, and compared with a reference threshold for discarding an incoming cell when said value (VLB) exceeds said reference threshold. In an ATM system additional devices for controlling the cell flow in accordance with other traffic parameters may be present and their working has to be properly coordinated. Such coordination does not involve problems when, as a result of the comparison with the threshold a cell is to be discarded. However when the threshold is not exceeded and the requirements of one of such additional devices are not met, the cell has to finally be discarded. In such a situation the current value should be decreased by the first quantity since the cell has not really be forwarded, which is the same as if no cell has been arrived for that connection as for what concerns the Leaky Bucket Value VLB.

Due to the updating method of EP-A-0 381 275, it would be quite troublesome to insert a decreasing step for decrementing the VLB of those active connections for which a cell, although being acceptable for the local policing unit, has been discarded due to the response of an outer control device. Therefore the method disclosed by EP-A-0 381 275 could not effectively be used when more than one device for the control of the cell flow is provided or might be added to the switching node in the future.

Object of the Inventions

The object of this invention is therefore to implement a method and a control unit capable to eliminate the above mentioned inconveniences and limits for the former technique.

Disclosure of the Invention

The invention consists of a method for controlling the cell flow in an ATM telecommunication system, according to the so-called Leaky Bucket principle,

where to each active connection is associated a current value, to be updated only upon the arrival of an information cell relating to said connection, said updating comprising the increase of said current value by a first quantity upon said cell arrival and the decrease thereof by a second quantity equal to the product of a third quantity and the length of time elapsed between two consecutive updatings of said current value, said value being compared with a reference threshold for discarding the incoming cell when said value exceeds said reference threshold,

characterized by the fact that when said value does not exceed said reference threshold after an updating:

i) a first acceptance signal is generated;
ii) a second acceptance signal from another device controlling the cell flow is checked,
iii) if said second acceptance signal is an enabling signal the cell is let through the system,
iv) if said second acceptance signal is a blocking signal the cell is discarded and a state signal is set whereby upon the next arrival of a cell of the concerned active connection said value will only be decreased by the product of said third quantity and the length of time elapsed, with said state signal being reset at the same time if said second acceptance signal is an enabling signal.

The invention consists also of a device for controlling the cell flow in an ATM switching node comprising a connection network and a number of exchange termination units connected thereto, each receiving incoming cell flows and transmitting outcoming cell flows, characterized by the fact that each of said exchange terminating units comprises:

- a header translation and processing unit receiving the incoming cell flow for converting the cell format and selectively forwarding the cells to the connection network;
- a routing memory connected to said processing unit;
- a parameter memory storing at least one traffic parameter relevant to the active connections;
- at least one policing unit connected to said parameter memory, for checking whether the incoming cells meet said at least one traffic parameter and accordingly controlling the forwarding of the cells to the connection network, said at least one policing unit comprising:

an input/output unit connected to said parameter memory;
a register file storing the traffic parameters for connection classes and connected to said input/output unit through an internal data bus and an internal address bus;
a memory controller for controlling the loading and storage sequence to and from said parameter memory;
an arithmetic unit connected to said internal data bus for carrying out the updating operations of a current value associated to each active connection;
a central controller supervising the updating operations of said current value.

Further advantageous characteristics result from the appended claims.
According to the claimed invention, the technical problem to insert a decreasing step for decrementing the VLB of those active connections for which a cell, although being acceptable for the local policing unit, has been discarded due to the response of an outer control device is solved by checking an acceptance signal from the outer (additional) device, or a signal representative of the logical AND of a number of such devices, and in case the cell is to be discarded, by leaving unchanged the already incremented value of VLB, but at the same time setting a flag which will limit the next updating thereof to the subtraction of said third quantity and the length of time elapsed. In other words, in the next following updating the increase by the first quantity will be omitted since the value VLB has already been increased in the previous updating.

## Brief Description of the Drawings

The invention shall now be described making reference to a preferred, but not limiting, realization form, shown referring to the enclosed figures, where:

Fig. 1 shows a diagram of the ATM connection network and the central unit terminations connected to the same;
Fig. 2 shows a diagram of some units forming part of the exchange termination unit (ET), including a control unit according to the invention;
Fig. 3 shows more in detail the connections to the control unit according to the invention;
Fig. 4 shows a construction of the control unit according to the invention;
Fig. 5 shows the structure of data in the memory, and
Fig. 6, already considered, shows the known control principle of cells called Leaky Bucket.

## Description of a Preferred Embodiment

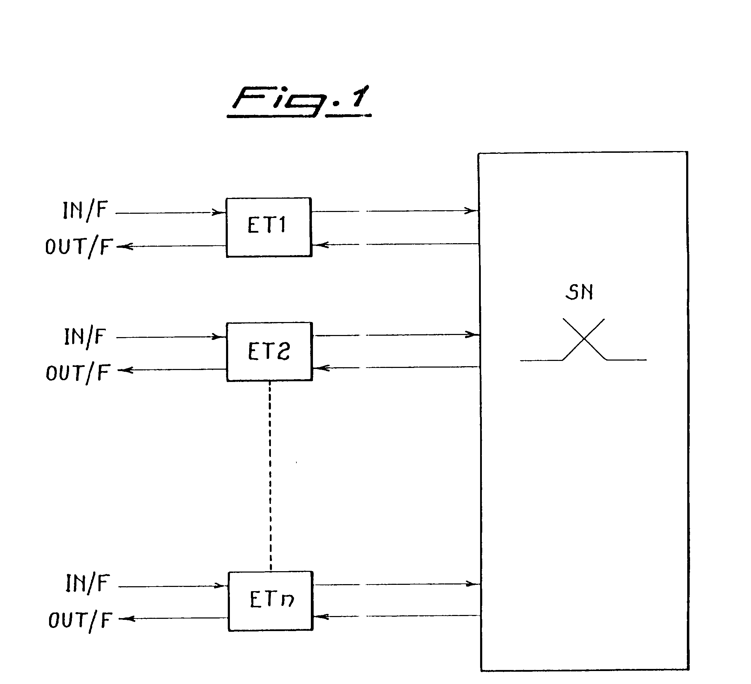

Referring to Fig. 1, an ATM switching node includes a connection network SN, to which different exchange termination units (ET) are connected, receiving incoming cell flows IN/F and transmitting outgoing cell flows OUT/F, correctly routed to the SN network.

These input and output flows can take place through an ATM link, for instance having a capacity of approximately 156 Mbit/sec. A given number of virtual channels and virtual paths, called in short hereafter VC/VP, can be active on this link.

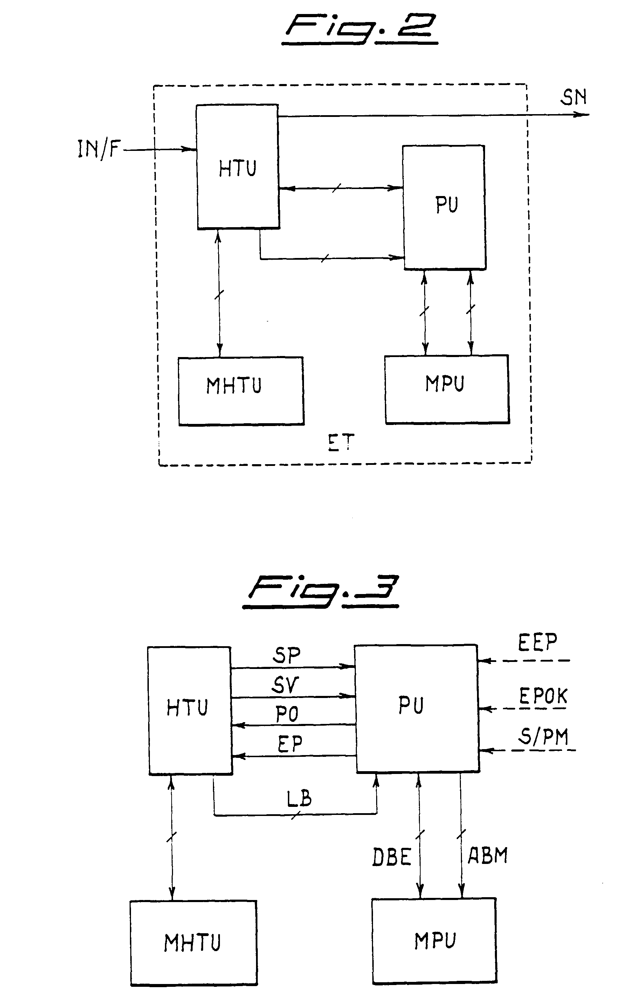

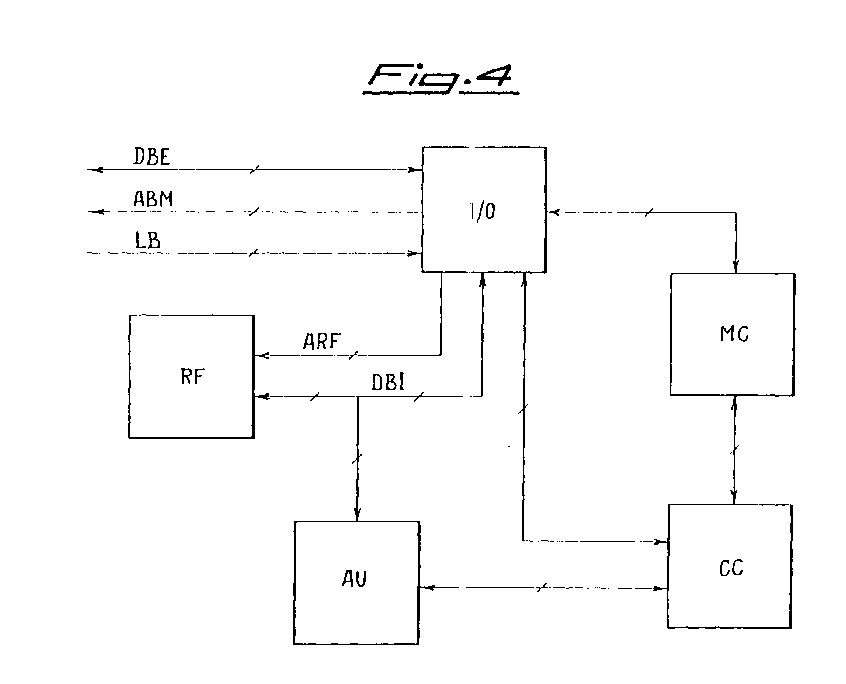

An ET structure, upstream side (that is towards the SN network) is shown more in detail in Figures 2 and 3. It includes a HTU assembly (Header processor and Translation Unit) receiving the incoming flow, processing the cells at ATM level and transforming the cells from the ATM standard format to proprietary format internal to the node, before these are (possibly) sent to the SN.

The control of the flow at the ATM node input is carried out at this level, in cooperation between HTU and a PU unit (Policing Unit), present also in the ET, having the specific task to verify the compliance of VC/VP behaviour with the parameters agreed between the user and the network operator during the call set up phase. The non conformity or infringement can determine the elimination of the cell or its marking for further evaluation on its accessibility in the network.

The elimination and/or marking of cells infringing these parameters are actually made by the HTU since, according to the invention, PU does not directly receive the incoming cell flow, but it is connected to the HTU unit through a four-wire interface on which four signals are exchanged, marked SP, SV, PO and EP, and through an LB bus for the communication of virtual path (VP) and virtual circuit (VC) identifiers of the incoming cell.

Should the PU unit detect a non compliance, it gives the answer to the HTU in due time for the cell is rejected (or marked) by this unit, before it is sent to the network. This procedure performs, from the conceptual point of view, the function of the schematic arrangement, shown in Fig.6, of a controlled switch SW to reject cells in excess.

The PU unit has an associated dedicated RAM memory, called MPU, containing the so-called values of Leaky Bucket parameters relating to active connections. For instance, matching each address, these values include the counter value and the threshold value associated to a given link. The MPU memory is able to contain, e.g. 2048 addresses ($2^{11}$), each including 8 bytes, totalling 16384 bytes ($2^{14}$).

Therefore the counter, which according to the Leaky Bucket method is increased, decreased and compared with a threshold value, is here replaced by the content of a PU register where the content of a given location of the MPU memory is loaded for these operations.

As it can be better noticed from Fig. 3, the interface between HTU and PU foresees two wires for each direction, and particularly two wires for SP and SV signal for the possible activation of the control procedure from HTU to PU, and two wires for EP and PO signals for acceptance indication.

Particularly, SP is the starting signal informing the PU to carry out the control on the cell identified by the VCI/VPI or other identifier, made available to the PU on a LB bus (Label Bus), while SV is the validation signal; PO is the output signal which communicates the result of the control to HTU, and EP is the validation output signal of PO. Matching each cell, SV and EP strobe signals are used to perform a four-phase asynchronous protocol between the HTU assembly and the PU unit, irrespective of the presence or not of a cell to be controlled. The interface is of the general type and allows an easy coupling of the PU with other components, in other points of the network, where the engaged band width control can be required (e.g. at the input of an ATM statistic multiplexer, etc.).

Therefore, according to the invention, to control all VC/VP active at the same time on the ATM link, which can also be thousands on a same exchange termination unit (ET) of the public network, a central device is employed, connected to a memory in whose addresses counter contents are allocated, each one of them being updated at the arrival of the corresponding cell.

In the first model of Leaky Bucket the decrease operation of counters is made separately for each VC/VP with a frequency set by the Clock dedicated to the same. However, this method has the disadvantage to have to make, in the same cell time, the decrease (updating) of counters for a number of VC/VP which cannot be foreseen before, theoretically even up to a maximum of all VC/VP active on the link at the same time.

According to the invention, the PU performs the control of the cell flow of all VC/VP active on the link at the same time, in an independent way, performing the updating of the "virtual counter" of a single VC/VP at each cell time, instead of a plurality of VC/VP as specified above. This is performed making the updating of the VC/VP counter only at the arrival of the cell relevant to it, according to the following formula:

$$VLB = VLB + INC - (CLK - LST) \cdot DEC \qquad (1)$$

where the variables have the following meanings:

- VLB is the filling current value of the Leaky Bucket associated to the particular VC/VP. It is contained in a portion (see Fig. 5) of the address location in the MPU memory corresponding to the special link, from which it is drawn up for updatings, and where it is brought back after any updating.
- INC is the value by which the current value VLB is increased when a new cell of that connection arrives. Preferably this value is not a unit value, but it is always a higher one. For instance it can reach a maximum value of ($2^{16}$ -1).
- DEC is the value by which the counter is decreased at each cell time, which can be freely selected from 1 and INC.
- CLK is the absolute time, which is increased by one unit with a period equal to the ATM cell duration (that is every 2,83 μsec approx. for the 156 Mbit/s link).
- LST is the time of arrival of the last cell relevant to a given link. Therefore LST is assumed equal to CLK when the new cell is accepted because it does not infringe the controlled parameter, and in general (CLK-LST) indicates the time elapsed from the last updating of the current value VLB relevant to the link under consideration.

A possible and preferred realization of the PU unit is given in Fig. 4.

The PU unit shown in Fig. 4 includes five main units, and more in particular a controller MC and a controller CC, an arithmetic unit AU, a file or register file RF, and an input/output I/O unit.

The central controller CC supervises updating and refresh (described here after) operations, while the memory controller MC has the function to control the loading and storage sequence to and from the MPU.

The arithmetic unit AU, where updating and refresh operations are actually made, includes two 16 bit records, two 8x8 multipliers to make a multiplication between two 16-bit binary numbers, and two arithmetic-logic units (ALU) suitable for 32 bit arithmetic operations.

The register file RF is used to contain the Leaky Bucket parameters for link classes, as defined herebelow. The file is made of one storage unit, where on initialization, Leaky Bucket parameters are written, read by preset locations of the MPU. This memory is addressed through the address bus ARF and data addressed to, and coming from the same, transit on the internal data bus DBI.

The input/output I/O unit connects the external data bus DBE for the connection with the MPU to the internal data bus DBI, it controls the ABM address bus for the MPU external RAM on MC control and the ARF address bus on CC control.

Fig. 5 shows the organization of an address block of the MPU memory. Each address block or data record contains the current parameters for the execution of the control method. Fields are the following:

VLB Field: it is a 28 bit field containing the current value of the counter indicating the Leaky Bucket filling; it is updated according to (1), at the arrival of a new ATM cell from the relevant connection, only if the cell complies with what agreed, or to each refresh operation relevant to that address.

The VLB value is updated only when a corresponding cell arrives. In case the updating results in a negative value, VLB is assumed equal to zero. The upper limit of this value is a threshold S: if the updating underway involves the overcoming of the threshold value, an infringement is signalled and the VLB value is not updated.

INC/DEC Field: it is a 16 bit read only field for the PU, containing the value associated to the parameter to be controlled for the relevant VC/VP.

LST Field: it is a 16 bit field and contains the CLK value corresponding to the last updating of the VLB value. When an infringement is detected, LST is not updated, according to what said above.

Status Field ST: it is a 4 bit field where the new call information is stored, through the NC bit, having value 1 for the first cell of each VC/VP, in such a way that PU initiates the VLB value at S/2; the class of the connection underway CC0-CC1 defining the threshold and increase/decrease values; and the VD bit whose function shall be described later on.

Since the increase and the decrease of the VLB value relevant to VC/VP are made only at the arrival of the corresponding ATM cell, the result of this updating operation depends on the time elapsing from the arrival of two consecutive cells belonging to the subject VC/VP, as indicated in (1). The time elapsed from the arrival of the last cell is obtained as difference module-n between CLK and LST, if these are represented on n bits.

If a VC/VP allows too time elapse between two cells, the counter generating the CLK signal could make a complete module-n count without the updating of the LST value, and therefore an overflow condition could occur, that is the subsequent cell of said VC/VP, arrived after a complete tour of the counter CLK, is considered as arrived after the previous one since CLK and LST values result being close, and (CLK-LST) results to be small. It could occur that users, who employ a reduced and irregular band width, that is who send cells with a comparative low and/or irregular rithm, see their cells suppressed due to the overflow effect, with an ensuing different treatment among users, and particularly punishing just the connections having lower frequencies.

The increase of counter sizes is only a partial solution of the problem, since there are some limits to this extension, and worse than that, with a very long counter cycle, the penalization deriving from the possible cell suppression is even higher.

According to the invention, a periodical re-writing or refresh of VLB and LST values of each link is foreseen, where the datum is re-written as decreased by the time elapsed. More particularly, at each cell time, equal to 2,83 μsec (averagedly) in the example considered, the value relevant to a VC/VP is modified according to the following relation:

$$VLB = VLB - (CLK - LST) \cdot DEC \qquad (2)$$

where the variables have the same meanings described for (1).

This updating is made in succession for each VC/VP. In other words, compared to the relation (1), governing the control, INC is not added because no cell has arrived, but VLB is decreased by (CLK-LST). DEC and VLB and LST values are updated in the MPU memory, considering in this way only the time elapsed from their last updating.

In pratice, in a cell time, refresh of values relevant to a link is made first, applying the relation (2), and then, if a cell arrives, the actual verification is made, applying the relation (1) to the parameters relevant to the VC/VP belonging to the cell arrived.

It must be noticed that, in principle, the refresh operation intervenes on the values contained in an address of the MPU memory different from the one being the object of the control operation. Occasionally, it can occur to make a refresh operation in the same cell time, followed by a control operation on the values relevant to the same VC/VP, or contained in the same MPU address. In this case, the result of the two subsequent updatings of VLB is equal to the one which can be obtained with a single updating, applying only the relation (1), and therefore the refresh operation is completely transparent to the user of the ATM network.

If a $2^n$ address MPU memory was foreseen, the complete updating of all VC/VPs should take place after $2^n$ cell times or CLK increases. Due to the fact that VC/VPs active at the same time on a same link could be even more than 2000, n can have to be higher than 11; preferably, the CLK counter, and therefore LST, are selected of the 16 bit length, that is each one of the variables CLK and LST is 16 bit long. With this choice the upper limit of the MPU maximum dimension, which is $2^{16}$ addresses maximun, results far beyond practical requirements for use.

To prevent overflow it is sufficient to perform the refresh operation with an intervention frequency not higher than the overflow cycle time (equal to $2^{16}$ cell time), and therefore the device runs for whichever equipment of the MPU memory not higher than the above mentioned maximum dimension.

Preferably, according to the invention, VC/VPs active at the same time on the link are subdivided into classes or groups and the classification of VC/VP into one class is indicated by the CC value (Connection Class) contained in the MPU at the address corresponding to the VC/VP. The class is selected during the link establishment phase and therefore the CC value can be programmed according to the final contract stipulated with the user. Also DEC value is programmable according to the final contract with the user. On the contrary, the INC value and the threshold value S can be programmed according to the class. It is thus possible to save space in the memory, because an INC value and an S value for each VC/VP have not to be stored in the MPU, but only the CC value to identify the relevant class.

In this case DEC is proportional to the Bit Rate one wants to control and INC corresponds to the number of equal intervals into which the link band width is divided and therefore it depends on the minimum value of band width which can be allocated and controlled. For instance, having INC represented on 16 bits we can discriminate among Bit Rates differing of about 2 kbit/s.

An alternative realization is to maintain the INC value programmable according to the contract stipulated with the user, while the DEC value is made programmable according to classes. In this case INC is proportional to the Bit Rate to be controlled and DEC corresponds to the width of intervals into which the link band width is divided, and therefore it conforms to the minimum band width we can allocate and control, that is DEC = 1 corresponds to a 2 kbit/s band width, for the 156 Mbit/s link, if the maximum dimension of INC (and therefore of DEC) is equal to 16 bits.

As an indication, without limiting the scope of the invention, the number of classes has been selected equal to 4, therefore the CC value results represented on 2 bits CC1 and CC0, as shown in Fig. 5.

According to the invention, the PU unit can be programmed to operate in Single Mode (SM) or in Parallel Mode (PM), through polarization of the S/PM input shown in Fig. 3. SM operation has been described herein before.

On the contrary, the operation in PM, the PU unit controls an indication coming from the outside. This indication comes to the EPOK and EEP inputs represented with dotted lines in Fig. 3.

The information relevant to the non acceptance of the cell due to events out of the subject PU control (e. g. infringement of parameters controlled by other PU or other type units), is given to the EPOK input, while the signal validating EPOK is given at the EEP input.

The PU evaluates the EPOK signal only if it has not detected the violation i.e. when it supplies at the output PO=1. In this case, if the PU finds EPOK=0, in correspondence of the EEP rising edge, it stores VD=1 in the status field ST of the MPU memory (see Fig. 5), at the address relevant to the VC/VP, which the considered cell belongs to, otherwise it stores VD=0. Therefore:

if PO=1 and EPOK=1, it results VD=0;
if PO=1 and EPOK=0, it results VD=1;
if PO=0, EPOK is not considered and VD is not modified.

Each time PU is activated by HTU to perform the cell control (SP=1 in correspondence of the rising edge SV), it updates the VLB value according to the VD value stored in the MPU memory in the following way:

1. with VD=0, PU applies the formula (1), as in Single Mode operation;
2. with VD=1, PU updates VLB without increasing the value of INC quantity, since it has already made this increase on the arrival of the preceeding cell of the same VC/VP, which was rejected by HTU due to events independent from the PU under consideration. Therefore the formula (2) is applied, and therefore we can talk of refresh like algorithm.

The refresh operation is not affected by the Single/Parallel Mode operation, and in the Parallel Mode it is performed as previously described.

Though the invention has been described making particular reference to preferred realization forms and application methods, it is not limited to what described, but extends to cover all the obvious variations and/or modifications which shall be evident to the technicians in this field.

**Claims**

1. A method for controlling the cell flow in an ATM telecommunication system, according to the so-called Leaky Bucket principle,

where to each active connection (VC/VP) is associated a current value (VLB), to be updated only upon the arrival of an information cell relating to said connection,
said updating comprising the increase of said current value (VLB) by a first quantity (INC) upon said cell arrival and the decrease thereof by a second quantity equal to the product of a third quantity (DEC) and the length of time (CLK-LST) elapsed between two consecutive updatings of said current value (VLB),
said value (VLB) being compared with a reference threshold (S) for discarding the incoming cell when said value (VLB) exceeds said reference threshold (S),

characterized by the fact that when said value (VLB) does not exceed said reference threshold (S) after an updating:

i) a first acceptance signal (PO=1) is generated;
ii) a second acceptance signal (EPOK) from another device controlling the cell flow is checked,
iii) if said second acceptance signal (EPOK) is an enabling signal the cell is let through the system,

iv) if said second acceptance signal (EPOK) is a blocking signal the cell is discarded and a state signal (VD) is set whereby upon the next arrival of a cell of the concerned active connection said value (VLB) will only be decreased by the product of said third quantity (DEC) and the length of time elapsed (CLK-LST), with said state signal (VD) being reset at the same time if said second acceptance signal (EPOK) is an enabling signal.

2. A method as claimed in claim 1, characterized by the fact that the value of said threshold (S) is variable.

3. A method as claimed in claim 1, characterized by the fact that the value of said first quantity (INC) is variable.

4. A method as claimed in claim 1, characterized by the fact that the value of said third quantity (DEC) is variable.

5. A method as claimed in claims 2, 3 or 4, characterized by the fact that both the values of the said threshold (S) and said first quantity (INC) are programmable in accordance with predetermined connection classes negotiated at the call set-up, and that the value of said third quantity (DEC) is programmable in accordance with the type of the connection.

6. A method as claimed in claims 2, 3 or 4, characterized by the fact that both the values of the said threshold (S) and said third quantity (DEC) are programmable in accordance with predetermined connection classes negotiated at the call set-up, and that the value of said first quantity (INC) is programmable in accordance with the type of the connection.

7. A method as claimed in claims 2, 3 or 4, characterized by the fact that said current value (VLB) is firstly set to one half of said threshold value (S) on the arrival of a first information cell relevant to such connection.

8. A method as claimed in claims 1 to 7, characterized by the fact that said current value (VLB) is periodically decreased by a fourth quantity, with an intervention frequency lower than the overflow cycle time of the counter defining the difference between said absolute time (CLK) and the time (LST) of the previous updating of said current value (VLB).

9. A method as claimed in claim 8, characterized by the fact that said fourth quantity is equal to the product of said third quantity (DEC) and the difference between the absolute time (CLK) on the moment of the periodical decrease and the time (LST) of the previous updating of said current value (VLB).

10. A device for controlling the cell flow in an ATM switching node comprising a connection network (SN) and a number of exchange termination units (ETi) connected thereto, each receiving incoming cell flows (IN/F) and transmitting outcoming cell flows (OUT/F), characterized by the fact that each of said exchange terminating units (ETi) comprises:

- a header translation and processing unit (HTU) receiving the incoming cell flow (IN/F) for converting the cell format and selectively forwarding the cells to the connection network (SN);
- a routing memory (MHTU) connected to said processing unit (BTU) ;
- a parameter memory (MPU) storing at least one traffic parameter relevant to the active connections;
- at least one policing unit (PU) connected to said parameter memory (MPU), for checking whether the incoming cells meet said at least one traffic parameter and accordingly controlling the forwarding of the cells to the connection network (SN), said at least one policing unit (PU) comprising:

an input/output unit (I/O) connected to said parameter memory (MPU);
a register file (RF) storing the traffic parameters for connection classes and connected to said input/output unit (I/O) through an internal data bus (DBI) and an internal address bus (ARF);
a memory controller (MC) for controlling the loading and storage sequence to and from said parameter memory (MPU);
an arithmetic unit (AU) connected to said internal data bus (DBI) for carrying out the updating operations of a current value (VLB) associated to each active connection (VC/VP);
a central controller (CC) supervising the updating operations of said current value (VLB).

11. A device as claimed in claim 10, characterized by the fact that said arithmetic unit (AU) carries out the updating operations of the current value (VLB) associated to each active connection (VC/VP) according to the formula:

$$VLB = VLB + INC - (CLK - LST) \cdot DEC$$

where

VLB is the current value;

INC is the value by which the current value VLB is increased when a new cell of that connection arrives; DEC is the value by which the counter is decreased at each cell time;

CLK is the absolute time; and

LST is the time of arrival of the last cell relevant to the considered active connection.

12. A device as claimed in claims 10 or 11, characterized by the fact that said at least one policing unit (PU) is connected to said header translation and processing unit (HTU) through a four-wire interface and a bus (LB) for the exchange of virtual path (VP) and virtual channel (VC) indicators of the incoming cell.

13. A device as claimed in claims 10 or 11, characterized by the fact that said parameter memory (MPU) is a RAM memory with address blocks containing a record made of status fields (ST), one current value field (VLB), one field (INC/DEC) containing the value associated to the parameter to be controlled for the relevant connection (VC/VP), and one field (LST) containing the time of the last updating of the current value field (VLB) of the relevant connection.

14. A device as claimed in claim 13, characterized by the fact that said status field (ST) comprises four bits, one bit (NC) storing a new call information, two bits (CCO-CC1) storing the class of connection which in turn defines said threshold value (S) and such increase/decrease values (INC, DEC), and one bit (VD) for recording the infringement of parameters controlled by additional control units.

**Patentansprüche**

1. Methode zur Regelung des Zellflusses in einem ATM Telekommunikationssystem nach dem sogenannten Leaky Bucket Prinzip,

wo jeder aktiven Verbindung (VC/VP) ein aktueller Wert (VLB) hinzugefügt wird, der nur bei Eintreffen einer sich auf die genannte Verbindung beziehende Informationszelle aktualisiert wird,

wobei das genannte Aktualisieren das Erhöhen des genannten aktuellen Wertes (VLB) durch eine erste Größe (INC) bei dem genannten Eintreffen der Zelle und seine Verminderung durch eine zweite Größe gleich dem Produkt einer dritten Größe (DEC) und der Länge der Zeit (CLK-LST) einschließt, die zwischen zwei aufeinander folgenden Aktualisierungen des genannten aktuellen Wertes (VLB) verflossen ist, wobei der genannte Wert (VLB) mit einer Referenzschwelle (S) verglichen wird zum Ausscheiden der eingehenden Zelle, wenn der genannte Wert (VLB) die genannte Referenzschwelle (S) übersteigt,

dadurch gekennzeichnet, daß, wenn der genannte Wert die genannte Schwellenreferenz (S) nach einer Aktualisierung nicht übersteigt:

i) ein erstes Annahmesignal (PO=1) erzeugt wird;

ii) ein zweites Annahmesignal (EPOK) von einer anderen den Zellfluß kontrollierenden Vorrichtung geprüft wird;

iii) wenn das genannte zweite Annahmesignal (EPOK) ein Freigabesignal ist, kann die Zelle das System passieren,

iv) wenn das genannte zweite Annahmesignal (EPOK) ein Speersignal ist, wird die Zelle ausgeschieden und ein Zustandssignal (VD) gesetzt, wobei beim nächsten Eintreffen einer Zelle der betroffenen aktiven Verbindung der genannte Wert (VLB) nur um das Produkt der genannten dritten Größe (DEC) und der Länge der verstrichenen Zeit (CLK-LST) verringert, wobei das genannte Zustandssignal (VD) auf die gleiche Zeit zurückgestellt wird, falls das genannte zweite Annahmesignal (EPOK) ein Freigabesignal ist

2. Methode entsprechend Anspruch 1, dadurch gekennzeichnet, daß der Wert des genannten Schwellenwerts (S) variable ist.

3. Methode entsprechend Anspruch 1, dadurch gekennzeichnet, daß der Wert der genannten ersten Größe (INC) variable ist.

4. Methode entsprechend Anspruch 1, dadurch gekennzeichnet, daß der Wert der genannten dritten Größe (DEC) variable ist.

5. Methode entsprechend den Ansprüchen 2, 3 oder 4, dadurch gekennzeichnet, daß beider werte des genannten Schwellenwerts (S) und der genannten ersten Größe (INC) programmierbar sind entsprechen vorbestimmter Verbindungsklassen, die bei Rufschaltung festgelegt wurden, und daß der Wert der genannten dritten Größe (DEC) programmierbar ist in Übereinstimmung mit der Art der Verbindung.

6. Methode nach den Ansprüchen 2, 3 oder 4, dadurch gekennzeichnet, daß beide Werte des genannten Schwellenwerts (S) und der genannten dritten Größe (DEC) in Übereinstimmung mit vorbestimmten Verbindungsklassen, die bei Rufschaltung festgelegt wurden, in Abstimmung mit der Art der Verbindung programmierbar sind.

7. Methode entsprechend den Ansprüchen von 1 bis 7, dadurch gekennzeichnet, daß der genannte aktuelle Wert ((VLB) zuerst auf die Hälfte des genannten Schwellenwerts (S) gesetzt wird bei Eintreffen einer ersten Informationszelle, die für diese Verbindung relevant ist.

8. Methode entsprechend den Ansprüchen von 1 bis 7, dadurch gekennzeichnet, daß der genannte aktuelle Wert (VLB) periodisch um eine vierte Größe reduziert wird, mit einer Interventionsfrequenz, die niedriger ist als die Zeit des Überlaubyklus des Zählwerks, das die Differenz zwischen der genannten absoluten Zeit (CLK) und der Zeit (LST) der voraufgegangenen Aktualisierung des genannten aktuellen Werts (VLB).

9. Methode entsprechend Anspruch 8, dadurch gekennzeichnet, daß die genannte vierte Größe gleich dem Produkt der dritten Größe (DEC) und der Differenz zwischen der absoluten Zeit (CLK) zum Zeitpunkt der periodischen Verringerung und der Zeit (LST) der voraufgegangenen Aktualisierung des genannten aktuellen Wertes (VLB) ist.

10. Vorrichtung zur Steuerung des Zellflusses in einem ATM-Schaltknoten, die ein hiermit verbundenes Verbingungsnetz (SN) und eine Anzahl von Vermittlungsendeinheiten (ETi) umfaßt, wobei jede eingehende Zellflüsse (IN/F) empfängt und ausgehende Zellflüsse (OUT/F). überträgt, dadurch gekennzeichnet, daß jede der genannten Vermittlungsendeinheiten (ETi) folgendes umfaßt:

- eine Header-Übettragungs- und Verarbeitungseinheit (HTU), die den eingehenden Zellfluß (IN/F) zur Umwandlung des Zellformats und selektiven Weiterbeförderung der Zellen zum Verbindungsnetz (SN) empfängt;
- einen Leitspeicher (MHTU) verbunden mit der Verarbeitungseinheit (HTU);
- einen Parameterspeicher (MPU), der zumindest einen die aktiven Verbindungen betreffenden Betriebsparameter speichert;
- mindestens eine mit dem genannten Parameterspeicher (MPU) verbundene Überwachungseinheit (PU) verbunden mit der genannten Parametereinheit (MPU), um zu überprüfen, ob die eingehenden Zellen mindestens einem Betriebsparameter entsprechen und folglich die Weiterbeförderung der Zellen zum Verbindungsnetz (SN) zu steuern, wobei die genannte Überwachungseinheit folgendes umfaßt:

eine Eingangs-/Ausganseinheit (I/O) verbunden mit dem genannten Parameterspeicher (MPU);
ein Registerverzeichnis (RF), das die Betriebsparameter für Verbindungsklassen speichert und durch einen internen Datenübettragungsweg (DBI) und einen internen Adreßbus (ARF) mit der genannten Eingangs/Ausgangseinheit (I/O) verbunden ist;

eine Speicherregler (MC) zur Steuerung der Lade- und Speicherfolge zum und vom genannten Parameterspeicher (MPU);
eine arithmetische Einheit (AU) verbunden mit dem genannten internen Datenbus (DBI) zur Durchführung der Aktualisierungsfunktionen eines aktuellen Wertes (VLB), der mit jeder aktiven Verbindung (VC/VP) verknüpft ist;
ein zentraler Regler (CC), der die Aktualisierungsfunktionen des genannten aktuellen Wertes (VLB) überwacht.

11. Vorrichtung entsprechen Anspruch 10, dadurch gekennzeichnet, daß die genannte arithmetische Einheit (AU) die Aktualisierungsfunktionen des aktuellen Wertes (VLB), der mit jeder aktiven Verbindung (VC/VP) verknüpft ist entsprechend der Formel:

$$VLB = VLB + INC - (CLK - LST) \cdot DEC$$

wobei

VLB der aktuelle Wert ist;
INC ist der Wert, um den der aktuelle Wert VLB erhöht wird, wenn eine neue Zelle dieser Verbindung ankommt;
DEC ist der Wert, um den der Zähler bei jeder Zellzeit verringert wird;
CLK ist die absolute Zeit; und
LST ist die Ankunftszeit der letzten Zelle, die die in Betracht genommene aktive Verbindung betrifft.

12. Vorrichtung entsprechend den Ansprüchen 10 und 11, dadurch gekennzeichnet, daß die genannt mindestens eine Überwachungseinheit (PU) mit der genannten Header-Übertragungs- und Verarbeitungseinheit (HTU) durch eine vierphasige Schnittstelle und einen Bus (LB) zum Austausch der Indikatoren des virtuellen Weges (VP) und des virtuellen Kanals (VC) der eingehenden Zelle.

13. Vorrichtung entsprechen Anspruch 10 oder 11, dadurch gekennzeichnet, daß der genannte Parameterspeicher (MPU) ein RAM-Speicher mit Adreßblöcken ist, welche eine aus Statusfeldern (ST) bestehende Aufzeichnung, ein Aktualwertfeld (VLB), ein Feld (INC/DEC), das mit dem für die betreffende Verbindung (VC/VP) zu kontrollierenden Parameter verknüpften Wert enthält, und ein Feld (LST) enthält, welches die Zeit der letzten Aktualisierung des Aktualwertfeldes (VLB) der betreffenden Verbindung enthält.

14. Vorrichtung nach Anspruch 13, dadurch gekennzeichnet, daß das genannte Statusfeld (ST) vier Bits enthält, ein Bit (NC), das die Information eines neuen Rufs speichert, zwei Bits (CCO-CC1), die die Verbindungsklasse speichert, welche ihrerseits den genannten Schwellenwert (S) und die entsprechenden Erhöhungs-/Verringerungswerte (INC/DEC) definiert, und ein Bit (VD) zur Registrierung der Verletzung von durch zusätzliche Reglereinheiten gesteuerte Parameter.

**Revendications**

1. Procédé pour le contrôle du débit d'unités de données dans un système de télécommunications selon la technique de mode de transfert asynchrone (ATM) selon le soi-disant principe "Leaky Bucket,

    où à chaque connexion active (VC/VP) une valeur courante (VLB) est associée, qui doit être mise à jour seulement à l'arrivée d'une unité de données d'information relative à la dite connexion,
    la dite mise à jour comprend l'augmentation de la dite valeur courante (VLB) par une première quantité (INC) à l'arrivée de la dite unité de données e réduction de celle-ci par une deuxième quantité égale au produit d'une troisième quantité (DEC) et la longueur de temps (CLK-LST) écoulée entre deux mises à jour successives

de la dite valeur courante (VLB),
    la dite valeur (VLB) étant comparée avec un seuil (S) de référence pour abandonner l'unité de données en entrée, quand la dite valeur (VLB) excède le dit seuil de référence (S)
caractérisée en ce que, quand la dite valeur (VLB) n'excède pas le dît seuil de référence (S) après une mise à jour:

    i) un premier signal d'acceptation (PO=1) est généré;
    ii) un deuxième signal d'acceptation (EPOK) d'une autre unité contrôlant le débit d'unités de données est contrôlé,
    iii) si le dit signal d'acceptation (EPOK) est un signal d'habilitation l'unité de données est laissée passer à travers le système,

    iv) si le dît deuxième signal d'acceptation (EPOK) est un signal de blocage l'unité de données est abandonnée et un signal d'état est mis par lequel à la prochaine arrivée d'une unité de données de la connexion active concernée la dite valeur (VLB) sera seulement diminuée par le produit de la dite troisième quantité (DEC) et la longueur de temps écoulée (CLK-LST), avec le dit signal d'état (VD) étant remis au même temps, si le dît deuxième signal d'acceptation (EPOK) est un signal d'habilitation.

2. Procédé selon la revendication 1, caractérisé en ce que la valeur du dit seuil (S) est variable.

3. Procédé selon la revendication 1, caractérisé en ce que la valeur de la dite première quantité (INC) est variable.

4. Procédé selon la revendication 1, caractérisé en ce que la valeur de la troisième quantité (DEC) est variable.

5. Procédé selon les revendications 2, 3 ou 4, caractérisé en ce que les deux valeurs du dît seuil (S) et la dite première quantité (INC) sont programmables conformément aux classes de connexions prédéterminées négociées au début de l'appel, et que la valeur de la dite première quantité (INC) est programmable en accord avec le type de la connexion.

6. Procédé selon les revendications 2, 3 o 4, caractérisé en ce que les deux valeurs du dit seuil (S) et de la dite troisième quantité (DEC) sont programmables conformément aux classes de connexions prédéterminées negociées au début de l'appel, et que la valeur de la dite première quantité (INC) est programmable en accord avec le type de la connexion.

7. Procédé selon les revendications 2, 3 ou 4, caractérisé en ce que la valeur courante (VLB) est en premier lieu mise à une moitié de la dite valeur de seuil (S) à l'arrivée d'une première unité de données d'information relative à telle connexion.

8. Procédé selon les revendications de 1 à 7, caractérisé en ce que la dite valeur courante (VLB) est périodiquement réduite par une quatrième quantité, avec une fréquence d'interventions plus basse que le temps du cycle d'overflow du conteur définissant la différence entre le dit temps absolu (CLK) et le temps (LST) de la mise à jour précédente de la dite valeur courante (VLB).

9. Procédé selon la revendication 8, caractérisé en ce que la dite quatrième quantité est égale au produit de la dite troisième quantité (DEC) et la différence entre lev temps absolu (CLK) au moment de la diminution périodique et le temps (LST) de la mise à jour précédente de la dite valeur courante (VLB).

**10.** Unité pour contrôler le débit d'unités de données dans un noeud de commutation ATM comprenant un réseau de connexion (SN) et un nombre d'unités de terminaison de centrale (ETi) reliées à celui-ci, chacune recevant des débits d'unités de données en entrée (IN/F) et transmettant des débits d'unités de données en sortie (OUT/F), caractérisée en ce que chacune des dites unités de terminaison de centrale comprend:

- une unité de conversion et d'élaboration d'en-tête recevant le débit d'unités de données en entrée (IN/F) pour convertir le format des unités de données et envoyer les unités de données au réseau de connexion (SN);
- une mémoire d'acheminement (MHTU) reliée à la dite unité d'élaboration (HTU);
- une mémoire de paramètres (MPU), qui mémorise au moins un paramètre de trafic relatif aux connexions actives;
- au moins une unité de surveillance (PU) reliée à la dite mémoire de paramètres (MPU) pour contrôler, si les unités de données rencontrent le dît au moins un paramètre de trafic, et conformément contrôler l'envoi des unités de données vers le réseau de connexion (SN), la dite au moins une unité de surveillance (PU) comprenant:

  une unité entrée/sortie (I/O) reliée à la dite mémoire de paramètres (MPU);
  un archive à registre (RF) conservant les paramètres de trafic pour des classes de connexion et relié à la dite unité d'entrée/de sortie (I/O) par un bus de données interne (DBI) et un bus d'adresses interne (ARF);
  un contrôleur de mémoire (MC) pour le contrôle la séquence de charge et de conservation vers e en provenance de la dite mémoire de paramètres (MPU);
  une unité arithmétique (AU) reliée au dît bus de données interne (DBI) pour effectuer les opérations de mise à jour de la valeur courante (VLB) associée à chaque connexion active (VC/VP);
  un contrôleur central (CC) surveillant les opérations de mise à jour de la dite valeur courante (VLB).

**11.** Unité selon la revendication 10, caractérisée en ce que la dite unité arithmétique (AU) effectue les opérations de mise à jour de la valeur courante (VLB) associée à chacune des connexions actives (VC/VP) selon la formule:

$$VLB = VLB + INC - (CLK - LST) \cdot DEC$$

où

VLB est la valeur courante;
INC est la valeur par laquelle la valeur courante (VLB) est augmentée, quand une nouvelle unité de données de cette connexion arrive;
DEC est la valeur par laquelle le conteur est diminué à chaque temps d'unité de données;
CLK est le temps absolu; et
LST est le temps d'arrivée de la dernière unité de données relative à la connexion active prise en considération.

**12.** Unité selon les revendications 10 ou 11, caractérisée en ce que la dite au moins une unité de surveillance (PU) est reliée à la dite unité de conversion et d'élaboration (HTU) par une interface à quatre fils et un bus (LB) pour l'échange des indicateur de pas virtuel (VP) et canal virtuel (VC) de l'unité de données en entrée.

**13.** Unité selon les revendications 10 ou 11, caractérisé en ce que la dite mémoire de paramètres (MPU) est une mémoire RAM avec des bloc d'adresses contenant un archive fait de champs d'état (ST), un champ de valeur courante (VLB), un champ (INC/DEC) contenant la valeur associée au paramètre à contrôler pour la connexion relative (VC/VP) et un champ (LST) contenant le temps de la dernière mise à jour du champ de valeur courant (VLB) de la connexion relative.

**14.** Unité selon la revendication 13, caractérisée en ce que le dît champ d'état (ST) comprend quatre bits, un bit (NC) mémorisant les informations du nouvel appel, deux bits (CCO-CC1) mémorisant la classe de connexion, qui à son tour définit la dite valeur de seuil (S) et les valeurs d'augmentation/diminution (INC/DEC), et un bit (VD) pour registrer l'infraction de paramètres contrôlés par des unités de contrôle supplémentaires.

Fig.1

# Fig.2

# Fig.3

# Fig.4

EP 0 596 914 B1

## _Fig.5_

| ST | VLB | INC/DEC | LST |
|----|-----|---------|-----|

| NC | VD | CC1 | CC0 |
|----|----|-----|-----|

## _Fig.6_